**Europäisches Patentamt**

**European Patent Office**

**Office européen des brevets**

(19)

(11) Veröffentlichungsnummer: **0 288 061 B1**

(12) **EUROPÄISCHE PATENTSCHRIFT**

(45) Veröffentlichungstag der Patentschrift: **23.12.92**

(51) Int. Cl.5: **E05F 1/16**, F16F 1/12

(21) Anmeldenummer: **88106415.8**

(22) Anmeldetag: **21.04.88**

(54) **Federanschlusselement.**

(30) Priorität: **22.04.87 DE 3713501**
**06.07.87 DE 3722304**

(43) Veröffentlichungstag der Anmeldung:
**26.10.88 Patentblatt  88/43**

(45) Bekanntmachung des Hinweises auf die
Patenterteilung:
**23.12.92 Patentblatt  92/52**

(84) Benannte Vertragsstaaten:
**AT BE CH DE ES FR GB IT LI NL SE**

(56) Entgegenhaltungen:
DE-A- 1 923 424     DE-U- 1 764 461
GB-A- 209 410       GB-A- 382 220
US-A- 3 521 320     US-A- 4 057 235
US-A- 4 385 754

(73) Patentinhaber: **HÖRMANN KG AMSHAUSEN**

**W-4803 Steinhagen/Westfalen(DE)**

(72) Erfinder: **Hörmann, Michael, Dipl.-Ing.**
**Upheider Weg 94**
**W-4803 Steinhagen/Westfalen(DE)**

(74) Vertreter: **Flügel, Otto, Dipl.-Ing.**
**Wissmannstrasse 14, Postfach 81 05 06**
**W-8000 München 81(DE)**

Rank Xerox (UK) Business Services

EP 0 288 061 B1

**Beschreibung**

Die Erfindung bezieht sich auf eine Schraubenzugfedereinrichtung, insbesondere für den Gewichtsausgleich von Torblättern, vorzugsweise von über Kopf bewegbaren, einstückigen Torblättern, mit einem Federanschlußelement, das eine einteilige Anschlußausbildung für die Festlegung an einer Federhaltereinrichtung und mehrere Eingreifkörper aufweist, auf deren jeden ein praktisch im Windungsverlauf endend ausgebildetes Anschlußende einer Schraubenzugfeder aufgeschoben ist und deren jeder in seinen sich etwa in Längsrichtung der aufgeschobenen Schraubenzugfeder erstreckenden Seitenkantenbereichen wenigstens zwei einander gegenüberliegende, hakenförmige Vorsprünge aufweist, die Wendelbereiche der aufgeschobenen Schraubenzugfeder hintergreifen.

Es ist bekannt, für den Gewichtsausgleich von Torblättern, insbesondere über Kopf bewegbaren einstückigen Torblättern, Schraubenfedern vorzusehen, und zwar eine Federgarnitur an jeder Torblattseite. In einfachster Ausführung und bei entsprechend geringem auszugleichendem Torblattgewicht kommt man mit einer Feder pro Seite aus, es sind jedoch auch schon zwei nebeneinander angeordnete Schraubenfedern und solche ineinander angeordneter Art vorgesehen worden.

Ein besonderer Vorteil eines solchen Paketes aus mehreren parallelen Schraubenzugfedern anstelle einer einzigen besteht erstens darin, daß nicht alle Federn gleichzeitig brechen, ein plötzlicher totaler Ausfall der Gewichtsausgleichsfedern also nicht eintritt. Darüber hinaus ist die Vorspannkraft der einzelnen Schraubenfeder entsprechend der Anzahl der parallelen Schraubenfedern geteilt. Für die einzelne entsprechend schwache Feder kommt man mit einem verhältnismäßig dünnen Federdraht aus mit der Folge, daß die Anzahl der Windungen über die Schraubenzugfederlänge hin gesehen wesentlich größer ist als bei einer einzigen großen Feder. Dies wiederum führt dazu, daß der Spalt zwischen den benachbarten Wendeln dieser einzelnen Schraubenzugfeder auch im Enddehnungsbetriebszustand verhältnismäßig klein ist und zwar weniger als 4 mm beträgt, so daß ein besonderer Fingerschutz nicht erforderlich ist.

Allen diesen Federgarnituren, ob starke einzelne Schraubenfedern oder Bündel paralleler schwächerer Einzelfedern, ist gemeinsam, daß die Federn mit von ihrem Wendelkörper abgebogenen Einhängehaken versehen sind, mit denen sie in entsprechende Einhängeöffnungen von Federhalterungen, Langloch-Federbändern und dergleichen eingreifen. Bei Federbruch führt dies dazu, daß sich Federbruchteile aus diesen Einhängeverbindungen lösen und abgeschleudert werden können.

Eine bekannte Schraubenzugfedereinrichtung der eingangs genannten Art - DE 19 23 424 - weist ein Federanschlußelement auf, das mit verschiedenen Eingreifkörpern bzw. Ausbildungen für die Aufnahme von entsprechend vielen Schraubenzugfedern versehen ist. Auf einen dieser von dem Korpus des Federanschlußelementes als flacher Bereich abragend ausgeformten Eingreifkörper, der an seinen gegenüberliegenden Seitenberandungen hakenförmig ausgebildete Vorsprünge aufweist, ist eine Schraubenzugfeder mit einem praktisch im Wendelverlauf endenden Schraubenfederende in Federlängsrichtung aufgeschoben, so daß die hakenförmigen Vorsprünge entsprechende Wendelabschnitte hintergreifen. Die Seitenberandungen des der ausrichtenden Halterung der aufgeschobenen Schraubenzugfeder dienenden Eingreifkörpers sind dabei in Federlängsrichtung zueinander parallel verlaufend und vor und hinter den Vorsprüngen gleichbleibend breit ausgebildet.

Es ist weiterhin bekannt - DE-GM 17 64 461 - eine Schraubenzugfedereinrichtung für eine einzige Schraubenzugfeder mit zwei Federanschlußelementen auszustatten, deren je eines in eines der beiden Enden der Feder eingreift. Die Federanschlußelemente sind jeweils mit einer Anschlußausbildung und einem Eingreifkörper versehen, welch letzterer in das jeweilige Schraubenfederende eingeschraubt wird. Dabei sind an den an den gegenüberliegenden, sich zur Schraubenfeder hin verjüngenden Seitenrändern des Eingreifkörpers Vorsprünge vorgesehen, die zwischen die Wendel des jeweiligen Schraubenfederendes eingreifen. Die Vorsprünge sind dabei hinsichtlich der Längsachse der Schraubenfeder seitlich dreieckförmig vorspringend ausgebildet.

Der Erfindung liegt die Aufgabe zugrunde, die Festlegung der Federn an ihren jeweiligen Halterungen einfach zu gestalten und dennoch eine Gefahr des Lösens bei Federbruch auszuschalten, und zwar auch für Federn unterschiedlicher Stärke unter Verwendung ein- und derselben Federanschlüsse, insbesondere auch im Hinblick auf mehrere parallel angeordnete Schraubenzugfedern.

Diese Aufgabe wird nach einer ersten erfinderischen Idee dadurch gelöst, daß jeder Eingreifkörper sich in Eingreifrichtung verjüngend ausgebildet ist und an seinem verjüngten Ende schmaler und hinter den Vorsprüngen breiter als der Innendurchmesser der aufgeschobenen Schraubenzugfeder bemessen ist und daß beide praktisch im Windungsverlauf endend ausgebildete Anschlußenden der Schraubenfedern jeweils auf einen Eingreifkörper an entsprechend zwei Federanschlußelementen aufgeschoben sind.

Jeder Eingreifkörper kann grundsätzlich unterschiedliche Formen aufweisen, auch mantelseitig abgeflachte konische oder kegelige Abschnitte, insbesondere in einfacher Ausführung einen plattenförmigen Körper, an dessen schräg zueinander in Verjüngungsrichtung verlaufenden Seitenkanten jeweils ein Vorsprung ausgebildet ist, so daß sich ein Paar von Vorsprüngen ergibt, das wenigstens vorgesehen ist, um ein Federende aufzunehmen. Die Aufnahme geschieht dadurch, daß der verjüngte Abschnitt des Eingriffskörpers, der senkrecht zur Verjüngungsrichtung gesehen an seinem Einführrende schmaler als der Innendurchmesser der Schraubenfeder ist, in diese eingeführt wird. Dann vergrößert sich der Abstand der schrägen Seitenflächen bis zu den Wurzeln der Vorsprünge, deren Abstand senkrecht zur Schraubenfederlängsachse bzw. zur Längsrichtung des Vorsprunges gesehen dem Innendurchmesser der aufzuschiebenden Feder entspricht, d.h. im wesentlichen gleich ist.

Verwendet man nur dünne Federn, so kann man diese auf den jeweiligen Vorsprung aufschieben, wobei sich aufgrund des im Bereich der Vorsprünge wachsenden Abstandes das Federende dehnt und nach Überspringen von mehreren, beispielsweise drei, Wendeln unter quer zur Schraubenlängsrichtung verlaufender Querspannung an dem Angriffskörper anliegt. Eine solche Dehnung der endseitigen Federwendel bei Aufschieben einer dünnen Schraubenfeder ist bei einer stärkeren Schraubenfeder aus entsprechend dickerem Federdraht jedoch nicht mehr möglich, so daß das Aufschieben zu einer Zerstörung der Vorsprünge führt.

Die Vereinigung zwischen dem Eingreifkörper des Federanschlußelementes und dem entsprechenden Schraubenfederende geschieht im Rahmen der Erfindung nicht durch Eindrehen, sondern durch Aufschieben der Feder in deren Längsrichtung, ohne daß eine Federdrehung stattfindet. Dies vereinfacht die Montage erheblich und ist von besonderem Vorteil dann, wenn nicht nur eine Schraubenfeder, sondern deren mehrere parallel an einem Federanschlußelement angeordnet werden sollen. Bei nur einer Feder kann man nämlich das Federanschlußelement gegenüber dem Federkörper drehen, bei mehreren auf diese Weise anzubringenden parallelen Federn ist dies nicht möglich. Dies ist von besonderer Bedeutung.

Eine dünne Feder läßt sich auf einen Eingreifkörper aufschieben, dessen Vorsprünge eines Paares in Achsrichtung gesehen nur um eine halbe Wendelsteigung gegeneinander versetzt sind. Es wird dabei von Schraubenzugfedern ausgegangen, deren Wendel im ungedehnten Zustand der Schraubenfeder aneinanderliegen, insoweit also einen geschlossenen Zylindermantel bilden. Aufgrund der Dünne des verwendeten Federdrahtes können die Vorsprünge zwischen zwei Wendel eingreifen, indem sie die Wendel an dieser Stelle von den anderen entsprechend durch Längsausdehnung der Feder trennt.

Bei Verwendung einer Schraubenfeder desselben Innendurchmessers mit wesentlich dickerem Federdraht dehnt sich die Feder nicht mehr in der vorgeschilderten Weise der schwachen Schraubenfeder. Erfindungsgemäß ist deshalb vorgesehen, die beiden Vorsprünge des wenigstens einen Paares an den einander gegenüberliegenden Seitenflankenbereichen des wenigstens einen Eingreifkörpers derart in Achsrichtung der Schraubenzugfeder bzw. in Längsrichtung des Vorsprunges gegeneinander versetzt anzuordnen, daß der in dieser Längsrichtung gesehene Abstand zwischen den Vorsprüngen größer als die halbe Wendelsteigung, beispielsweise etwa entsprechend der zweifachen und insbesondere der dreifachen Wendelsteigung, zu bemessen. Dabei ist vom verjüngten Ende des Vorsprunges in Richtung der Anschlußausbildung gesehen hinter dem dem verjüngten Ende am nächsten gelegenen Vorsprung eine Aussparung vorgesehen, die sich über den dem anderen, höher gelegenen Vorsprung gegenüberliegenden Seitenflankenbereich erstreckt und die vorzugsweise etwa so tief ist wie der gegenüberliegende Vorsprung hoch, d.h. von der zugehörigen Seitenflanke seitlich abragend.

Das an einem solchermaßen ausgebildeten Eingriffskörper festzulegende Ende einer starken, also aus dickem Federdraht bestehenden Schraubenfeder, das an den Vorsprüngen angreifen soll, wird vorgedehnt, und zwar derart, daß im Vordehnungsbereich eine Wendelsteigung besteht, die das doppelte bis vierfache der übrigen, im nichtgespannten Zustand aneinanderliegenden Wendel aufweist. Diese eine entsprechend stärker geneigt verlaufende Wendel greift mit diametral einander gegenüberliegenden Abschnitten an den beiden Vorsprüngen an.

Wird nun diese starke Feder auf den Eingriffskörper geschoben, und zwar ohne zu drehen, mit ihrer Längsachse etwa fluchtend mit der Längsrichtung des Eingriffskörpers, dann wird durch die Verjüngung, die insbesondere zu dem verjüngten Ende hin vorgesehen Aufschiebeschräge der Vorsprünge etwa geradlinig etwa geradlinig ausgebildet ist, zunächst erreicht, daß ein Teil der Wendel, hier etwa drei, oberhalb des gedehnten Schraubenendbereiches über den zunächst erreichten Vorsprung hinweggeführt wird, worauf diese Wendel in die dem anderen Vorsprung gegenüberliegende Aussparung hineingedrängt werden, weil der gegenüberliegende Wendelbereich an der Schräge des anderen Vorsprunges anläuft. Dabei wird die Feder in der vorgedehnten Zone zusammengedrückt. Greift die durch die Vordehnung eine stärkere Steigung aufweisende Schraubenwendel hinter den Raum des ersten Vorsprunges, dann wird das Federende unter der Schubkraft, die aus der Zusammendrückung in der vorgedehnten Wendelzone stammt, weiter auf den Flankenbereich des Vorsprunges schlagartig vorgeschoben und die Wendel mit der größeren Steigung hintergreift beide Vorsprünge.

Wie dies im nachfolgend geschilderten zweiten Ausführungsbeispiel zu sehen ist, kann bei der Vordehnung der Feder derart verfahren werden, daß der den einen, dem verjüngten Ende des Eingriffskörpers näher gelegene Vorsprung hintergreifende Abschnitt der Wendel mit der vergrößerten Steigung im nicht aufgeschobenen Zustand der Feder den zur Federmitte hin gesehenen Abschnitt der Nachbarwendel noch fast berühren. Durch das beim Aufschieben erfolgende Vorschnellen des Federendes unter der Kraft der zusammengedrückten vorgedehnten Wendelzone wird dieser Abschnitt über den zugehörigen unteren Vorsprung gehoben und hintergreift diesen, wodurch zwischen diesem Abschnitt und dem Nachbarabschnitt der zur Federmitte hin folgenden Federwendel ein gewisser Abstand auftreten kann.

Die Vordehnung im Bereich des auf einen Eingriffskörper aufzuschiebenden Federendes ist bei starken, d.h. aus verhältnismäßig dickem und steifem Federdraht gebildeten Schraubenzugfedern erforderlich. Dünne Federn könnten auch ohne diese Vordehnzone aufgeschoben werden, wie dies eingangs für den Fall einer Versetzung der Vorsprünge um nur 1/2 Wendelsteigung geschildert wurde. In besonders bevorzugter Ausführung der Erfindung werden aber alle Federn, die für das Aufschieben auf ein-und denselben bzw. auf Vorsprünge gleicher Abmessung bestimmt sind, mit dieser Vordehnzone versehen. Zwischen der Vordehnzone und dem zugehörigen Federende befinden sich vorzugsweise etwa drei Wendel in ungedehnter Lage, also einander berührend.

Diese und weitere bevorzugte Ausführungsformen der Erfindung ergeben sich aus den Unteransprüchen. In der Zeichnung sind Ausführungsbeispiele wiederge- geben, auf die besonders Bezug genommen wird und deren nachfolgende Beschreibung die Erfindung näher erläutert. Es zeigt:

Figur 1 ein erstes Ausführungsbeispiel in Vorderansicht;

Figur 2 das erste Ausführungsbeispiel um 90° gedreht in Seitenansicht;

Figur 3 das erste Ausführungsbeispiel in Schnittdarstellung der Linie III-III in Fig. 1;

Figur 4 eine andere Ausgestaltung eines Eingreifkörpers des ersten Ausführungsbeispieles;

Figur 5 ein zweites Ausführungsbeispiel in Vorderansicht;

Figur 6 das zweite Ausführungsbeispiel um 90° gedreht in Seitenansicht;

Figur 7 das zweite Ausführungsbeispiel in Schnittdarstellung nach der Linie VII-VII in Fig. 5;

Figur 8 einen als Einzelheit vergrößert wiedergegebenen Abschnitt des zweiten Ausführungsbeispiels.

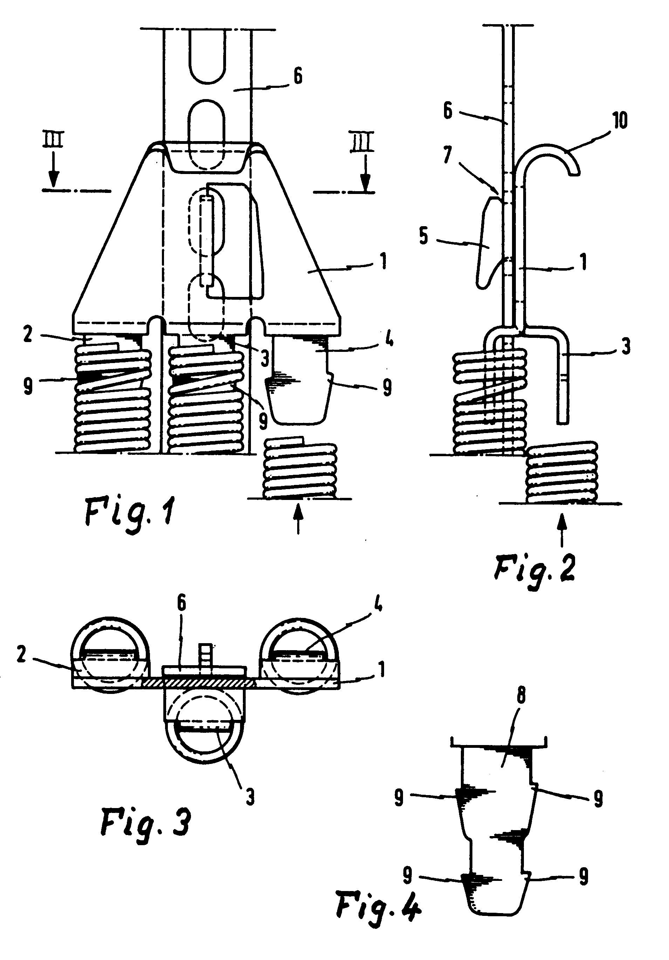

Das in den Fig. 1 bis 4 des ersten Ausführungsbeispieles dargestellte obere Federanschlußelement ist aus einem Blechteil gebildet, das eine Anschlußausbildung 1 aufweist, an welchem abwechselnd seitlich abgekröpft insgesamt drei Eingreifkörper 2, 3 und 4 ausgebildet sind. Die Anschlußausbildung 1 umfaßt einen Haken 5 zur Aufhängung in einem Federaufnahmeband 6. Der Haken 5 ist durch eine nach oben weisende Mulde 7 gegen Herausfliegen aus dem Langloch des Aufnahmebandes bei eventuellem Federbruch gesichert. Des weiteren ist in Gegenrichtung zum vorspringenden Haken 5 an der Anschlußausbildung 1 eine Abbiegung 10 vorgesehen, die der Handhabung des Federanschlußelementes bei Einhängen in das Lochband 6 dient.

An dem Federanschlußelement ist eine der Anzahl der aufzunehmenden Federn entsprechende Zahl von Vorsprüngen bzw. Eingreifkörpern 2, 3 und 4 vorgesehen, deren jeder in ein Federende eingreift. Die Eingreifkörper sind als Blechvorsprünge ausgebildet und weisen zwei gegenüberliegende Seiten auf, die leicht zum freien Ende hin sich konisch verengend schräg verlaufen. Etwa im Mittelbereich dieser schräg verlaufenden Kanten sind nach außen hin abstrebende Vorsprünge 9 vorgesehen, die als Widerhaken dienen und von dem Schraubenwendeldraht hintergriffen werden. Dabei ist die Abmessung so getroffen, daß der Eingreifkörper in das Schraubenfederende hineingeführt und dann eingedrückt wird, worauf die Vorsprünge die Federwendel hintergreifen. Es werden etwa drei Wendel über die Vorsprünge hinweggeführt.

Der Erfolg ist, daß jede Feder außerordentlich gut an ihrem Eingriffskörper unter Vorspannung ansitzt, und der weitere Erfolg besteht insbedondere darin, daß bei Federbruch das an dem Eingreifkörper bzw. Federanschlußelement befestigte Federteil sich nicht aus dieser Halterung entfernen kann. Da eine solche Federaufnahme bevorzugt zu beiden Enden der Federn vorgesehen ist, müßte eine Feder an mehreren Stellen gleichzeitig brechen, um die Möglichkeit eines frei werdenden Federabschnittes zu ergeben, was aber außerordentlich unwahrscheinlich ist. Im übrigen könnte man für diesen Fall durch jede Feder noch einen Sicherungsdraht ziehen.

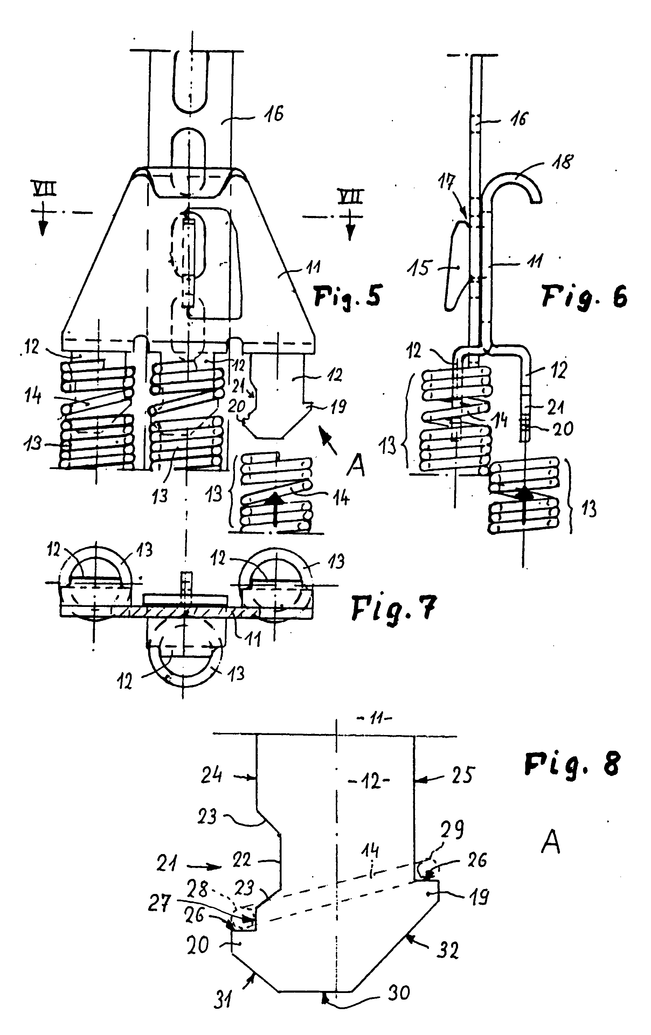

Das in den Fig. 5-8 dargestellte oben Federanschlußelement des zweiten Ausführungsbeispieles ist aus einem Blechteil gebildet, das eine Anschlußausbildung 11 aufweist, an welchem abwechselnd seitlich abgekröpft insgesamt drei Eingreifkörper 12 ausgebildet sind. Die Anschlußausbildung 11 umfaßt einen Haken 15 zur Aufhängung in einem Federaufnahmeband 16. Der Haken 15 ist durch eine nach oben weisende Mulde 17 gegen Herausfliegen aus dem Langloch des Aufnahmebandes bei eventuellem Federbruch gesichert. Des weiteren ist in Gegenrichtung zum vorspringenden Haken 15 an der Anschlußausbildung 11 eine Abbiegung 18 vorgesehen, die der Handhabung des Federanschlußelementes bei Einhängen in das Lochband 16 dient.

An dem Federanschlußelement ist eine der Anzahl der aufzunehmenden Schraubenzugfedern 13 entsprechende Zahl von Eingreifkörpern 12 vorgesehen, deren jeder in ein Ende der zugehörigen Schraubenfeder eingreift. Die Eingreifkörper 12 sind als Blechvorsprünge über Abkröpfungen einstückig an der Anschlußausbildung 11 ausgeformt.

Jede der dargestellten Schraubenzugfedern ist von ihrem an dem Vorsprung festzulegenden Ende aus gesehen etwa im Abstand von drei Wendeln mit einer Wendel 14 vergrößerter Steigung versehen, die durch eine entsprechende Vordehnung der Feder in diesem Bereich vorbereitend zur Verfügung gestellt ist, d.h. die Feder weist diese vorgedehnte Zone und damit die Wendel vergrößerter Steigung (2 bis 3 x so groß wie die Steigung der übrigen, aneinanderliegenden Wendel ) ohne Belastung bereits auf, bevor sie auf den zugehörigen Eingriffskörper 12 aufgeschoben wird.

Die Gestalt der - im übrigen untereinander gleich ausgebildeten - Eingreifkörper wird nachfolgend insbesondere unter Bezugnahme auf die vergrößerte Teildarstellung gemäß Einzelheit A erläutert:

In seinem an die Anschlußausbildung 11 anschließenden Wurzelbereich ist der blechförmige Eingreifkörper mit in Längsrichtung des Eingreifkörpers parallel zueinander verlaufenden Seitenflanken 24 und 25 versehen, deren eine in eine Aussparung 21 mündet, auf die folgend der eine Vorsprung 20 vorgesehen ist, der näher an dem frei auslaufenden Ende bzw. der Verjüngsabschlußkante 30 liegt als der andere Vorsprung 19, der unmittelbar im Anschluß an die andere Seitenflanke 25 vorspringend ist. Die Aussparung 21 ist trapezförmig ausgebildet, d.h. sie weist einen geradlinigen, parallel zur Längsrichtung des Eingreifkörpers verlaufenden Bodenrand 22 auf, an den sich seitlich nach außen geneigt erweiternd Seitenränder 23 anschließen. Der der Anschlußausbildung 11 näherliegende Seitenrand 23 läuft in der Seitenflanke 24 aus, während der andere Seitenrand 23 in einen Seitenflankenabschnitt 27 übergeht, der mit der Seitenflanke 24 etwa fluchtend verläuft.

Beide Vorsprünge 19 und 20 des Paares weisen in ihrem der Anschlußausbildung 11 zugewandten Bereich Halteschultern 26 auf, die rechtwinklig von den parallel zur Längsachse des Eingreifkörpers - gleichzusetzen mit der Schraubenlängsrichtung - verlaufen und mit der anschließenden Seitenflanke 25 - Vorsprung 19 - einerseits, mit dem Seitenflankenabschnitt 27 - Vorsprung 20 - andererseits rechtwinklige Auflager bzw. Haltesitze für die einander gegenüberliegenden Wendelabschnitte 28 und 29 der Wendel 14 mit der durch Vordehnung vergrößerten Steigung bilden, wie dies insbesondere aus der Einzelheitdarstellung ersichtlich ist. Der Seitenflankenabschnitt 27 ist etwa so lang wie die Halteschulter 26 des benachbarten Vorsprunges 20 seitlich abragend ausgebildet ist, so daß bei Aufschieben einer Feder wie aus der Vorder- und der Seitenansicht des Beispiels ersichtlich, die Wendel des Endbereiches der Feder oberhalb der vorgedehnten Zone um den Vorsprung 20 herum geführt werden, während der diametral gegenüberliegende Abschnitt der Endwendel an der zur Verjüngung führenden Seitenkante angreift, die hier im Anschluß an den Vorsprung 19 als entsprechend geneigt verlaufende Aufschiebeschräge 32 ausgebildet ist, der eine in gleicher Weise geneigte Aufschiebeschräge 31 zwischen dem Vorsprung 20 und der Verjüngungsabschlußkante 30 gegenüberliegt. Da die Neigungswinkel der Aufschiebeschrägen 31 und 32 in Bezug auf die Längsachse des Eingreifkörpers bzw. der aufzusetzenden Schraubenfeder etwa gleich sind, ist die Aufschiebeschräge 32, die vom Vorsprung 19 ausgeht, entsprechend länger als die andere Aufschiebeschräge 31.

Bei weiterem Aufschieben gelangen die oberen Wendel des Endbereiches der Schraubenfeder in die Aussparung 21, während sich die gegenüberliegenden Abschnitte dieser Wendel über den Vorsprung 19 schieben. Die Schraubenfeder vollführt somit in etwa eine seitliche Ausweichbewegung, worauf die Wendel mit der vergrößert ausgebildeten Steigung in den Bereich der Vorsprünge 19 und 20 gelangt. Durch das Aufschieben wird die vorgedehnte Zone etwas zusammengedrückt, so daß die Feder eine Druckvorspannung in Richtung auf die Anschlußausbildung 11 aufweist. Bei weiterem Aufschieben ergibt sich eine Art Schnappfunktion, die die Wendel 14 in die Lage auf den Haltesitzen der Vorsprünge 19 und 20 und das Federende völlig in den Bereich zwischen den Seitenflanken 24 und 25 geschnellt wird.

Die Aufschieberichtung der Feder ist in den beiden oberen Zeichnungen durch Pfeile gekennzeichnet, und zwar hinsichtlich einer noch nicht aufgeschobenen Feder, während die beiden übrigen Federn ihre Halteposition an den entsprechenden Eingreifkörpern bereits eingenommen haben.

Die Breite der Eingreifkörper zwischen den Seitenflanken 24 und 25 und damit auch im Bereich der Haltesitze ist vorzugsweise gleich dem Innendurchmesser der aufzunehmenden Schraubenfedern, der ungeachtet der Federdicke und damit ungeachtet eines entsprechend unterschiedlichen Außendurchmessers dieser Schraubenfedern immer gleich bemessen ist. Auf diese Weise wird ein guter Haltesitz erreicht, der außerordentlich einfach herzustellen ist und sich für jede Feder einzeln vornehmen läßt, ohne daß die Feder gedreht werden muß. Der weitere Erfolg besteht vor allem auch darin, daß bei Federbruch das an dem Eingreifkörper bzw. Federanschlußelement befestigte Federteil sich nicht aus dieser Halterung entfernen kann. Da ein solches Federanschlußelement bevorzugt an beiden Enden der Federn vorgesehen ist, müßte eine Feder an mehreren Stellen gleichzeitig brechen, um die Möglichkeit eines freiwerdenden Federabschnittes zu ergeben, was aber außerordentlich unwahrscheinlich ist. Im übrigen könnte man zur Beherrschung auch dieses Falles durch jede Feder einen Sicherungsdraht ziehen.

Vorzugsweise wird man das in der Zeichnung wiedergegebene Federanschlußelement nicht nur in der oberen Lage verwenden, in die es in ein Langloch eines Federaufnahmebandes 6 bzw. 16 eingehängt wird, welches am obenliegenden Parallelogramm des Lenkergestänges eines Einblatt-Überkopftores angelenkt ist. Auch im unteren Bereich wird man bestrebt sein, ein identisches Federanschlußelement verwenden, das den herkömmlichen Federhaken umgreift. Sinn einer solchen Anpassung ist es, daß man bei bestehenden Toren Einzelfedern durch eine Anzahl paralleler schwächerer Federn ersetzen kann.

Eine solche Ausgestaltung eines Federaufnahmeelementes hat noch den besonderen Vorteil, daß es nicht mehr erforderlich ist, an dem Schraubenfederkörper der einzelnen Federn durch entsprechende Abbiegung der letzten Wendel eine Anschlußöse auszuformen. Man kann vielmehr die fortlaufend gewickelte Feder einfach durchtrennen und den jeweils abgetrennten Abschnitt ohne weitere Bearbeitung verwenden. Darüber hinaus erfaßt man durch den Widerhaken-Eingriff die Feder jeweils innenseitig an zwei schräg einander gegenüberliegenden Stellen und verteilt somit die in die Feder eingeleiteten Kräfte entsprechend.

**Patentansprüche**

1.　Schraubenzugfedereinrichtung, insbesondere für den Gewichtsausgleich von Torblättern, beispielsweise von über Kopf bewegbaren, einstückigen Torblättern, mit einem Federanschlußelement, das eine einteilige Anschlußausbildung (1) für die Festlegung an einer Federhalteeinrichtung (6) und mehrere Eingreifkörper (2 bis 4; 8) aufweist, auf deren jeden ein praktisch im Windungsverlauf endend ausgebildetes Anschlußende einer Schraubenzugfeder aufgeschoben ist und deren jeder in seinen sich etwa in Längsrichtung der aufgeschobenen Schraubenzugfeder erstreckenden Seitenkantenbereichen wenigstens zwei einander gegenüberliegende, hakenförmige Vorsprünge (9) aufweist, die Wendelbereiche der aufgeschobenen Schraubenzugfeder hintergreifen, **dadurch gekennzeichnet,** daß jeder Eingreifkörper (2 - 4; 8) sich in Eingreifrichtung verjüngend ausgebildet ist und an seinem verjüngten Ende schmaler und hinter den Vorsprüngen (9) geringfügig breiter als der Innendurchmesser der aufgeschobenen Schraubenzugfeder bemessen ist und daß beide praktisch im Windungsverlauf endend ausgebildete Anschlußenden der Schraubenfedern jeweils auf einen Eingreifkörper (2 - 4; 8) an entsprechend zwei Federanschlußelementen aufgeschoben sind.

2.　Schraubenzugfedereinrichtung nach Anspruch 1, **dadurch gekennzeichnet,** daß die Eingreifkörper (2 - 4; 8) an einer im wesentlichen plattenförmigen Anschlußausbildung (1) vorgesehen sind.

3.　Schraubenzugfedereinrichtung nach Anspruch 2, **dadurch gekennzeichnet,** daß die Eingreifkörper (2 - 4; 8) an der plattenförmigen Anschlußausbildung (1) abgekröpft ausgeformt sind, und zwar abwechselnd zu beiden Seiten der Anschlußausbildung (1) abgekröpft.

4.　Schraubenzugfedereinrichtung nach einem der Ansprüche 1 bis 3, **dadurch gekennzeichnet,** daß die Eingreifkörper (2 - 4; 8) in gleichmäßiger räumlicher Verteilung um die gemeinsame Federlastachse angeordnet sind.

5.　Schraubenzugfedereinrichtung nach einem der Ansprüche 1 bis 4, **dadurch gekennzeichnet,** daß der oder die Eingreifkörper (8) mehr als ein Paar von Vorsprüngen (9) aufweisen, die in Richtung der Verjüngungsachse gegeneinander versetzt ausgebildet sind und für Schraubenzugfedern unterschiedlichen Durchmessers bestimmt sind.

6.　Federeinrichtung nach einem der Ansprüche 1 bis 5, **dadurch gekennzeichnet,** daß die Vorsprünge (9) eines Paares parallel zur Verjüngungsachse gesehen um eine halbe Wendelsteigung der aufzuschiebenden Schraubenfeder gegeneinander versetzt angeordnet sind.

7. Federeinrichtung nach einem der Ansprüche 1 bis 6,
**dadurch gekennzeichnet,**
daß die Anschlußausbildung (1) einen Haken (5) zum Einhängen in eines der Langlöcher eines Federaufnahmebandes (6) aufweist, der durch eine in seinem der anzuschließenden Feder abgewandten Bereich vorgesehene Mulde (7) gegen ein Ausgreifen aus dem Langloch bei Federbruch gesichert ist.

8. Schraubenzugfedereinrichtung mit einer oder mehreren Schraubenfedern (13) und wenigstens einem Federanschlußelement (11, 12) das eine einteilige Anschlußausbildung (11) für die Festlegung an einer Federhaltereinrichtung (16) und einen bzw. entsprechend der Federzahl mehrere abgeflachte Eingreifkörper (12) aufweist, auf deren jeden ein praktisch im Windungsverlauf endend ausgebildetes Anschlußende einer Schraubenzugfeder (13) aufgeschoben ist und deren jede in seinen sich etwa in Längsrichtung der aufgeschobenen Schraubenzugfeder (13) erstreckenden Seitenkantenbereichen wenigstens zwei einander gegenüberliegende, hakenförmige Vorsprünge (19) aufweist, die Wendelbereiche der aufgeschobenen Schraubenzugfeder (13) hintergreifen,
**dadurch gekennzeichnet,**
daß jeder Eingreifkörper (12) sich in Eingreifrichtung verjüngend ausgebildet ist und an seinem verjüngten Ende schmaler und hinter den Vorsprüngen (19) geringfügig breiter als der Innendurchmesser der aufgeschobenen Schraubenzugfeder bemessen ist und daß auf den dem verjüngten Ende des Eingreifkörpers (12) nächstgelegenen Vorsprung (20) zur Anschlußausbildung (11) hin gesehen folgend eine Seitenflanken-Aussparung (21) ausgebildet ist, die den dem anderen Vorsprung (19) des Paares der Vorsprünge senkrecht zur Schraubenfederlängsachse gegenüberliegenden Seitenflankenbereich übergreift, wobei der in Schraubenfederlängsrichtung gesehene Abstand der beiden Vorsprünge (19, 20) des Paares größer ist als die halbe Steigung zwischen zwei aneinanderliegenden Wendeln der Schraubenzugfeder (13), vorzugsweise die zwei- bis vierfache Steigung aufweist.

9. Federeinrichtung nach Anspruch 8, **dadurch gekennzeichnet,** daß die Schraubenfeder (13) im Wendelbereich des Angriffes an dem Vorsprung-Paar (19, 20) derart vorgedehnt ausgebildet ist, daß diametral gegenüberliegende Abschnitte (28, 29) einer Wendel (14) auf den Vorsprüngen (19, 20) aufliegen.

10. Federeinrichtung nach Anspruch 8 oder 9, **dadurch gekennzeichnet,** daß die Vorsprünge (19, 20) an ihren der Anschlußausbildung (11) zugewandten Seiten mit etwa senkrecht zur Schraubenlängsachse abstehenden Tragschultern (26) und an ihren dem verjüngten Ende (30) des Eingreifkörpers (12) zugewandten Seiten mit nach außen und in Richtung der Anschlußausbildung (11) geneigt verlaufenden Aufschiebeschrägen (31, 32) versehen sind.

11. Federeinrichtung nach Anspruch 10, **dadurch gekennzeichnet,** daß die sich verjüngend ausgebildeten Seitenkanten des Eingriffkörpers (12) geradlinig in die Aufschiebeschräge (31, 32) der jeweilig benachbarten Vorsprünge (19, 20) übergehen.

12. Federeinrichtung nach einem der Ansprüche 8 bis 11, **dadurch gekennzeichnet,** daß die beiden Aufschiebeschrägen (31, 32) bzw. verjüngten Seitenkanten des Vorsprungs bzw. der Vorsprünge etwa unter dem gleichen Winkel zur Schraubenfederlängsachse verlaufen, so daß bei ineinanderübergehenden Seitenkanten in die jeweils angrenzenden Aufschiebeschrägen (31, 32) eine zur Längsachse verschobene Verjüngungsabschlußkante (30) auftritt.

13. Federeinrichtung nach einem der Ansprüche 8 bis 12, **dadurch gekennzeichnet,** daß die Seitenflanken (24, 25) des bzw. der Eingreifkörper (12) zwischen der Anschlußausbildung (11) und der Aussparung (21) einerseits und dem anderen Vorsprung (19) andererseits in Schraubenfederlängsrichtung parallel verlaufend ausgebildet sind.

14. Federeinrichtung nach einem der Ansprüche 8 bis 13, **dadurch gekennzeichnet,** daß zwischen der Aussparung (21) und dem benachbarten einen Vorsprung (20) ein Seitenflankenabschnitt (27) ausgebildet ist, der etwa in der Fluchtlinie des zwischen der Aussparung (21) und der Anschlußausbildung (11) liegenden Seitenflanke (24) verläuft.

15. Federeinrichtung nach Anspruch 14, **dadurch gekennzeichnet,** daß die Halteschulter (26) des einen Vorsprungs (20) und der anschließende Seitenflankenabschnitt (27) einen etwa rechtwinkligen Haltesitz für den einen Wendelabschnitt (28) bilden, während die Halteschulter (26) des anderen Vorsprungs (19) mit der anschließenden Seitenflanke (25) einen etwa rechtwinkligen Haltesitz für den anderen Wendelabschnitt (29) bildet.

16. Federeinrichtung nach einem der Ansprüche 8 bis 15, **dadurch gekennzeichnet,** daß die senkrecht zur Längsachse gesehene Tiefe der Aussparung (21) etwa der in gleicher Richtung gesehenen Höhe des gegenüberliegenden anderen Vorsprunges (19) entspricht.

17. Federeinrichtung nach einem der Ansprüche 8 bis 15, **dadurch gekennzeichnet,** daß die Aussparung (21) einen parallel zur Schraubenfederlängsachse verlaufenden geradlinigen Bodenrand (22) und von diesem ausgehend geneigt sich erweiternde Seitenränder (23) aufweist, (Trapez).

18. Federeinrichtung nach einem der Ansprüche 8 bis 17, **dadurch gekennzeichnet,** daß mehrere Eingreifkörper (12) für die Aufnahme der einen Enden entsprechend mehrerer parallel angeordneter Schraubenfedern (13) entsprechend voneinander beabstandet an einer Anschlußausbildung (11) vorgesehen sind.

19. Federeinrichtung nach einem der Ansprüche 8 bis 18, **dadurch gekennzeichnet,** daß die Eingreifkörper (12) an einer im wesentlichen flächigen Anschlußausbildung (11) vorgesehen sind.

20. Federeinrichtung nach Anspruch 19, **dadurch gekennzeichnet,** daß die Eingreifkörper (12) an der plattenförmigen Anschlußausbildung (11) abgekröpft ausgeformt sind, und zwar abwechselnd in beiden Abkröpfrichtungen.

21. Federeinrichtung nach einem der Ansprüche 18 bis 20, **dadurch gekennzeichnet,** daß die Eingreifkörper (12) in räumlich gleichmäßiger Verteilung um die resultierende Federlastachse angeordnet sind.

22. Federeinrichtung nach einem der Ansprüche 8 bis 21, **dadurch gekennzeichnet,** daß der oder die Eingreifkörper (12) mehr als ein Paar von Vorsprüngen (19, 20) aufweisen, die in Richtung der Verjüngungsachse gegeneinander versetzt ausgebildet sind und für Schraubenfedern unterschiedlichen Innendurchmessers bestimmt sind.

23. Federeinrichtung nach einem der Ansprüche 8 bis 22, **dadurch gekennzeichnet,** daß die Anschlußausbildung (11) einen Haken (15) zum Einhängen in eines der Langlöcher eines Federaufnahmebandes (16) aufweist, der durch eine in seinem der anzuschließenden Schraubenfeder (13) abgewandten Bereich vorgesehene Mulde (17) gegen ein Ausgreifen aus dem Langloch bei Federbruch gesichert ist.

24. Federeinrichtung nach einem der Ansprüche 8 bis 23, **dadurch gekennzeichnet,** daß an beiden Enden der Schraubenfeder (13) bzw. Schraubenfedern je eine Anschlußausbildung (11) vorgesehen ist.

## Claims

1. A helical tension spring device, more particularly for the weight-balancing of door leaves for example single up-and-over door leaves, having a spring connecting member comprising a single-part connecting portion (1) adapted to be secured to a spring mounting device (6) and a plurality of engagement members (2 to 4;8), onto each of which a connecting end of a helical tension spring is pushed, each said connecting end being formed so as to virtually stop in the course of a turn, and each engagement member having in its side edge regions, which extend substantially in the longitudinal direction of the pushed-on helical tension spring, at least two hook-like projections (9) provided on opposite sides which engage behind the helical regions of the pushed-on helical tension spring, characterised in that each engagement member (2-4;8) is tapered in the direction of engagement and dimensioned such that, at its tapered end, it is narrower and, behind the projections (9), slightly wider than the inside diameter of the helical tension spring when pushed-on, and in that each of the two connecting ends formed so as to virtually stop in the source of a turn are pushed onto an engagement member (2-4;8) provided on a corresponding two spring connecting member.

2. A helical tension spring device according to claim 1, characterised in that the engagement members (2-4;8) are provided on a substantially plate-shaped connecting portion (1).

3. A helical tension spring device according to claim 2, characterised in that the engagement members (2-4;8) provided on the plate-shaped connecting portion (1) are offset, i.e. alternatingly offset on either side of the connecting portion (1).

4. A helical tension spring device according to any one of claims 1 to 3, characterised in that the engagement members (2-4;8) are arranged about the joint spring load axis so as to be uniformly spatially distributed.

5. A helical tension spring device according to any one of claims 1 to 4, characterised in that the engagement member/s (8) has/have more than one pair of projections (9) which are formed so as to be offset in the direction of the axis of tapering and are intended for helical tension springs each of which has a different diameter.

6. A spring device according to any one of claims 1 to 5, characterised in that the projections (9) forming a pair are arranged so as to be offset by half a helical pitch of the helical spring to be pushed on, when viewed in the direction parallel to the axis of tapering.

7. A spring device according to any one of claims 1 to 6, characterised in that the connecting portion (1) has a hook (5) for attachment into one of the elongate holes of a spring mounting strip (6), said hook being secured against a disengagement from the elongate hole, in the event of a breakage of the spring, by means of a depression (7) provided in its region remote from the spring to be connected.

8. A helical tension spring device having one or more helical springs (13) and at least one spring connecting member (11,12) comprising a single-part connecting portion (11) for the securement to a spring mounting device (16) and, depending on the number of springs, one or more flattened engagement members (12), onto each of which a connecting end of a helical tension spring (13) is pushed, said connecting end being formed so as to virtually stop in the course of a turn, and each of which has, in its side edge regions extending substantially in the longitudinal direction of the pushed-on helical tension spring (13), at least two hook-shaped projections (19) provided on opposite sides which engage behind the pushed-on helical regions of the helical tension spring (13), characterised in that each engagement member (12) is tapered in the engagement direction and is dimensioned such that, at its tapered end, it is narrower and, behind the projections (19), slightly wider than the inside diameter of the pushed-on helical tension spring, and in that a lateral edge recess (21) is formed adjacent to the projection (20) next to the tapered end of the engagement member (12), when viewed in the direction of the connecting portion (11), said recess engaging over the lateral edge region positioned opposite the other projection (19) of the pair of projections, at right angles to the longitudinal axis of the helical spring, the spacing of the two projections (19,20) forming the pair being greater, when viewed in the longitudinal direction of the helical spring, than half the pitch between two adjoining helices of the helical tension spring (13), preferably being two to four times the pitch.

9. A spring device according to claim 8, characterised in that the helical spring (13) is pre-stressed in the helical region of engagement on the pair of projections (19,20) such that diametrically opposed portions (28,29) of a helix (14) rest on the projections (19,20).

10. A spring device according to either claim 8 or 9, characterised in that the projections (19,20) are provided, on their sides facing the connecting portion (11), with support shoulders (26) projecting substantially at right angles to the longitudinal axis of the spring, and, on their sides facing the tapered end (30) of the engagement member (12), with inclined sliding-on surfaces (31,32) extending at an angle oriented outwardly and in the direction of the connecting portion (11).

11. A spring device according to claim 10, characterised in that the tapered side edges of the engagement member (12) pass, in a straight line, into the inclined sliding-on surfaces (31,32) of the relevant adjacent projections (19,20).

12. A spring device according to any one of claims 8 to 11, characterised in that the two inclined sliding-on surfaces (31,32) or the tapered side edges of the projection or the projections extend substantially at the same angle, relative to the longitudinal axis of the helical spring, so that, with the side edges passing into the correspondingly adjacent inclined sliding-on surfaces (31,32), a tapering finishing edge (30) is produced which is displaced in the direction of the longitudinal axis.

13. A spring device according to any one of claims 8 to 12, characterised in that the side edges (24,25) of the engagement member or members (12) between the connecting portion (11) and, on the one hand, the recess (21) and, on the other hand, the other projection (19), are formed so as to extend parallel to the longitudinal direction of the helical spring.

14. A spring device according to any one of claims 8 to 13, characterised in that a side edge portion (27) is formed between the recess (21) and the one projection (20) which is adjacent, said side edge portion extending more or less in alignment with the side edge (24) positioned between the recess (21) and the connecting portion (11).

**15.** A spring device according to claim 14, characterised in that the support shoulder (26) of the projection (20) and the adjacent side edge portion (27) form a substantially right-angled retaining seat for the one helical portion (28), whereas the support shoulder (26) of the other projection (19) forms, together with the adjacent side edge (25), a substantially right-angled retaining seat for the other helical portion (29).

**16.** A spring device according to any one of claims 8 to 15, characterised in that the depth of the recess (21), viewed at right angles to the longitudinal axis, more or less corresponds to the height of the opposed other projection (19), when viewed in the same direction.

**17.** A spring device according to any one of claims 8 to 15, characterised in that the recess (21) has a straight bottom edge (22) extending parallel to the longitudinal axis of the helical spring and has side edges (23) widening at an angle (trapezium), proceeding from said bottom edge.

**18.** A spring device according to any one of claims 8 to 17, characterised in that a plurality of engagement members (12) are provided, at a corresponding spacing from one another, on a connecting portion (11) in order to receive one of the ends of a corresponding number of helical springs (13) arranged parallel to one another.

**19.** A spring device according to any one of claims 8 to 18, characterised in that the engagement members (12) are provided on a substantially flat connecting portion (11).

**20.** A spring device according to claim 19, characterised in that the engagement members (12) are formed so as to be offset on the plate-like connecting portion (11), namely alternatingly in the two offset directions.

**21.** A spring device according to any one of claims 18 to 20, characterised in that the engagement members (12) are arranged about the resultant spring load axis, so as to be spatially uniformly distributed.

**22.** A spring device according to any one of claims 8 to 21, characterised in that the engagement member/s (12) has/have more than one pair of projections (19,20) which are offset against one another in the direction of the axis of tapering and are intended for helical springs each of which has a different inside diameter.

**23.** A spring device according to any one of claims 8 to 22, characterised in that the connecting portion (11) has a hook (15) for attachment into one of the elongate holes of a spring mounting strip (16), said hook being secured against a disengagement from the elongate hole, in the event of a breakage of the spring, by means of a depression (17) provided in its region remote from the spring to be connected.

**24.** A spring device according to any one of claims 8 to 23, characterised in that a connecting portion (11) is provided at each end of the helical spring (13) or helical springs.

**Revendications**

**1.** Dispositif de ressorts de traction hélicoïdaux, notamment pour compenser le poids de panneaux de portes, par exemple des panneaux de portes d'une seule pièce susceptibles d'être déplacés au-dessus de la tête, dispositif comportant un élément de raccordement de ressorts, avec une configuration de raccordement (1) d'un seul tenant pour la fixation sur un dispositif de maintien de ressorts (6) et plusieurs organes d'accrochage (2 à 4; 8), sur chacun desquels est enfilée une extrémité de raccordement se terminant pratiquement en forme de spires d'un ressort de traction hélicoïdal, et dont chacun desquels comporte, sur ses zones de bordure latérales s'étendant à peu près en direction longitudinale du ressort de traction hélicoïdal ainsi enfilé, au moins deux saillies (9) en forme de crochets opposées l'une à l'autre et qui viennent en prise derrière les parties hélicoïdales du ressort de traction hélicoïdal ainsi enfilé, dispositif de ressorts de traction hélicoïdaux caractérisé en ce que chaque organe d'accrochage (2 à 4; 8) va en se rétrécissant dans la direction d'accrochage tandis qu'à son extrémité ainsi rétrécie, il est plus étroit que le diamètre interne du ressort de traction hélicoïdal enfilé sur lui et légèrement plus large que ce diamètre derrière les saillies (9), et en ce que les deux extrémités de raccordement se terminant pratiquement sous forme de spires des ressorts hélicoïdaux, sont respectivement enfilées sur un organe d'accrochage (2 à 4; 8) sur deux éléments de raccordement de ressorts correspondants.

2. Dispositif de ressorts de traction hélicoïdaux, selon la revendication 1, caractérisé en ce que les organes d'accrochage (2 à 4; 8) sont prévus sur une configuration de raccordement (1) essentiellement en forme de plaque.

3. Dispositif de ressorts de traction hélicoïdaux selon la revendication 2, caractérisé en ce que les organes d'accrochage (2 à 4; 8) sur la configuration de raccordement (1) en forme de plaque sont contre coudés vers l'extérieur et ceci alternativement des deux côtés de la configuration de raccordement (1).

4. Dispositif de ressorts de traction hélicoïdaux selon une des revendications 1 à 3, caractérisé en ce que les organes d'accrochage (2 à 4; 8) sont répartis uniformément dans l'espace autour de l'axe commun de traction des ressorts.

5. Dispositif de ressorts de traction hélicoïdaux selon une des revendications 1 à 4, caractérisé en ce que le ou les organes d'accrochage (8) comportent plus d'une paire de saillies (9) qui sont décalées les unes par rapport aux autres en direction de l'axe de rétrécissement et qui sont prévues pour des ressorts de traction hélicoïdaux de diamètres différents.

6. Dispositif de ressorts de traction hélicoïdaux selon une des revendications 1 à 5, caractérisé en ce que les saillies (9) d'une paire, vues parallèlement à l'axe de rétrécissement, sont décalées l'une par rapport à l'autre d'un demi-pas de spire du ressort hélicoïdal à enfiler.

7. Dispositif de ressorts de traction hélicoïdaux selon une des revendications 1 à 6, caractérisé en ce que la configuration de raccordement (1) comporte un crochet (5) pour permettre l'accrochage dans l'un des trous oblongs d'une bande de réception (6) des ressorts, ce crochet étant empêché de sortir du trou oblong en cas de rupture de ressorts par une dépression (7) prévue sur sa partie opposée au ressort à raccorder.

8. Dispositif de ressorts de traction hélicoïdaux avec un ou plusieurs ressorts hélicoïdaux (13) et au moins un élément de raccordement de ressorts (11, 12) qui comporte une configuration de raccordement d'un seul tenant (11) pour la fixation à un dispositif de maintien de ressorts (16) et un ou bien de façon correspondante au nombre des ressorts, plusieurs organes d'accrochage (12) sur chacun desquels est enfilée une extrémité de raccordement se terminant pratiquement sous la forme de spires d'un ressort de traction hélicoïdal (13), et dont chacun desquels comporte sur ses zones de bordure latérales s'étendant à peu près en direction longitudinale du ressort de traction hélicoïdal (13) ainsi enfilé, au moins deux saillies (19) en forme de crochets opposées l'une à l'autre, et qui viennent en prise derrière des parties de spires du ressort de traction hélicoïdal (13) ainsi enfilé, dispositif de ressorts de traction hélicoïdaux caractérisé en ce que chaque organe d'accrochage (12) va en se rétrécissant en direction de l'accrochage et est plus étroit à son extrémité rétrécie et légèrement plus large derrière les saillies (19) que le diamètre interne du ressort de traction hélicoïdal (12) enfilé sur lui, et en ce que, faisant suite à la saillie (20) la plus proche de l'extrémité rétrécie de l'organe d'accrochage (12) lorsqu'on regarde vers la configuration de raccordement (11), il est prévu un évidement (21) du flanc latéral, qui s'étend sur la zone de flanc latéral opposée perpendiculairement à l'axe longitudinal du ressort, à l'autre saillie (19) de la paire de saillies, tandis que la distance des deux saillies (19, 20) de la paire, mesurée en direction longitudinale du ressort, est supérieure au demi pas entre deux spires adjacentes du ressort de traction hélicoïdal (13), et de préférence, est de 2 à 4 fois ce pas.

9. Dispositif de ressorts selon la revendication 8, caractérisé en ce que le ressort hélicoïdal (13), dans la zone de spires de l'accrochage à la paire de saillies (19, 20) est étiré de façon que les parties diamétralement opposées (28, 29) d'une spire (14) s'appliquent sur les saillies (19, 20).

10. Dispositif de ressorts selon la revendication 8 ou la revendication 9, caractérisé en ce que les saillies (19, 20), sur leurs côtés en regard de la configuration de raccordement (11), sont munies d'épaulements porteurs (26) faisant saillie à peu près perpendiculairement par rapport à l'axe longitudinal du ressort, et sont munies sur leur côté en regard de l'extrémité rétrécie (30) de l'organe d'accrochage (12) de chanfreins d'enfilage (31, 32) s'étendant de façon inclinée en direction de la configuration de raccordement (11).

11. Dispositif de ressorts selon la revendication 10, caractérisé en ce que les bords latéraux allant en se rapprochant de l'organe d'accrochage (12) se poursuivent en ligne droite par les chanfreins d'enfilage (31, 32) des saillies (19, 20) respectivement voisines.

12. Dispositif de ressorts selon une des revendications 8 à 11, caractérisé en ce que les deux chanfreins d'enfilage (31, 32) ou bien les bords latéraux allant en se rapprochant de la saillie ou des saillies, s'étendent à peu près sous le même angle par rapport à l'axe longitudinal du ressort hélicoïdal, de sorte que dans le cas des bords latéraux se poursuivant à la rencontre l'un de l'autre par les chanfreins d'enfilage respectivement contigüs (31, 32), on a un bord terminal (30) du rétrécissement décalé par rapport à l'axe longitudinal.

13. Dispositif de ressorts selon une des revendications 8 à 12, caractérisé en ce que les flancs latéraux (24, 25) du ou des organes d'accrochage (12) sont prévus s'étendant parallèlement en direction longitudinale du ressort hélicoïdal entre la configuration de raccordement (11) et l'évidement (21) d'une part, et l'autre saillie (19) d'autre part.

14. Dispositif de ressorts selon une des revendications 8 à 13, caractérisé en ce que, entre l'évidement (21) et la saillie (20) voisine, il est prévu un tronçon (27) de flanc latéral qui s'étend à peu près dans l'alignement du flanc latéral (24) se situant entre l'évidement (21) et la configuration de raccordement (11).

15. Dispositif de ressorts selon la revendication 14, caractérisé en ce que l'épaulement d'arrêt (26) de la saillie (20) et le tronçon de flanc latéral (27) qui s'y raccorde, forment un siège d'arrêt à peu près à angle droit pour l'une (28) des parties de spires, tandis que l'épaulement d'arrêt (26) de l'autre saillie (19) forme avec le flanc latéral (25) qui s'y raccorde un siège d'arrêt à peu près à angle droit pour l'autre partie de spire (29).

16. Dispositif de ressorts selon une des revendications 8 à 15, caractérisé en ce que la profondeur, vue perpendiculairement à l'axe longitudinal, de l'évidement (21) correspond à peu près à la hauteur, vue dans la même direction, de l'autre saillie (19) située à l'opposé.

17. Dispositif de ressorts selon une des revendications 8 à 15, caractérisé en ce que l'évidement (21) comporte un bord de fond (22) rectiligne s'étendant parallèlement à l'axe longitudinal du ressort hélicoïdal, et comporte des bords latéraux (23) s'étendant de façon inclinée à partir de ce bord de fond (trapèze).

18. Dispositif de ressorts selon une des revendications 8 à 17, caractérisé en ce qu'il est prévu sur une configuration de raccordement (11), plusieurs organes d'accrochage (12) pour recevoir l'une des extrémités d'un nombre équivalent de ressorts hélicoïdaux (13) disposés parallèlement à un intervalle approprié les uns des autres.

19. Dispositif de ressorts selon une des revendications 8 à 18, caractérisé en ce que les organes d'accrochage (12) sont prévus sur une configuration de raccordement (11) essentiellement plane.

20. Dispositif de ressorts selon la revendication 19, caractérisé en ce que les organes d'accrochage (12) sur la configuration de raccordement (11) en forme de plaque, sont contre-coudés vers l'extérieur et ceci alternativement dans les deux directions coudées.

21. Dispositif de ressorts selon une des revendications 18 à 20, caractérisé en ce que les organes d'accrochage (12) sont répartis uniformément dans l'espace autour de l'axe de la résultante de traction des ressorts.

22. Dispositif de ressorts selon une des revendications 8 à 21, caractérisé en ce que le ou les organes d'accrochage (12) comportent plus d'une paire de saillies (19, 20) qui sont décalées les unes par rapport aux autres en direction de l'axe de rétrécissement et qui sont prévues pour des ressorts hélicoïdaux de diamètres internes différents.

23. Dispositif de ressorts selon une des revendications 8 à 22, caractérisé en ce que la configuration de raccordement (11) comporte un crochet (15) pour permettre l'accrochage dans un des trous oblongs d'une bande (16) de réception des ressorts, ce crochet étant empêché de sortir du trou oblong en cas de rupture du ressort grâce à une dépression (17) prévue sur sa partie opposée au ressort hélicoïdal (13) à raccorder.

24. Dispositif de ressorts selon une des revendications 8 à 23, caractérisé en ce qu'aux deux extrémités du ressort hélicoïdal (13) ou bien des ressorts hélicoïdaux, est respectivement prévue une configuration de raccordement (11).

Fig. 1

Fig. 2

Fig. 3

Fig. 4

Fig. 5

Fig. 6

Fig. 7

Fig. 8

A